# EUROPÄISCHE PATENTSCHRIFT

(11) **EP 1 133 402 B1**
(45) Veröffentlichungstag und Bekanntmachung des Hinweises auf die Patenterteilung: **26.02.2003**
(21) Anmeldenummer: 99962080.0
(22) Anmeldetag: 22.11.1999
(51) Int. Cl.: B60K 15/035, F02M 37/00

(54) **ANORDNUNG ZUM SPEICHERN VON KRAFTSTOFF UND VERFAHREN ZUM BETREIBEN EINES KRAFTSTOFFTANKS**
ARRANGEMENT FOR STORING FUEL AND METHOD FOR OPERATING A FUEL TANK
DISPOSITIF DE STOCKAGE DE CARBURANT ET PROCEDE DE FONCTIONNEMENT D'UN RESERVOIR A CARBURANT

(30) Priorität: 23.11.1998 DE 19854997
(43) Veröffentlichungstag der Anmeldung: 19.09.2001
(73) Patentinhaber: Siemens Aktiengesellschaft, 80333 München (DE); Vodafone AG, 40213 Düsseldorf (DE)
(72) Erfinder: RASCHE, Christian, D-44892 Bochum (DE); WIEMANN, Bernd, D-80469 München (DE); KLOS, Holger, D-81541 München (DE); WILHELM, Hans-Dieter, D-61267 Neu-Anspach (DE); ECK, Karl, D-60318 Frankfurt (DE); ZAPP, Thomas, D-44265 Dortmund (DE); RUMPF, Bernd, D-61130 Nidderau (DE)
(86) Internationale Anmeldenummer: DE9903758
(87) Internationale Veröffentlichungsnummer: WO00030883

(56) Entgegenhaltungen:
- EP-A- 0 611 674
- DE-A- 3 932 062
- DE-A- 3 932 192
- DE-A- 4 132 741
- DE-A- 19 805 220
- DE-C- 4 442 544
- US-A- 1 477 728
- US-A- 4 259 022
- US-A- 4 816 045
- US-A- 5 123 459

## Beschreibung

Die vorliegende Erfindung betrifft eine Anordnung, insbesondere in einem Fahrzeug, zum Speichern von flüssigem Kraftstoff, mit einem Kraftstofftank, der einen Kraftstofftankeinlaß und einen Kraftstofftankauslaß aufweist. Weiterhin betrifft die Erfindung ein Verfahren zum Betreiben eines Kraftstofftanks.

Kraftstofftanks der genannten Art sind bereits seit langem bekannt und werden beispielsweise zum Speichern von Kraftstoffen in Fahrzeugen aller Art eingesetzt.

Insbesondere beim Betanken solcher Kraftstofftanks kann es passieren, wenn beispielsweise Benzin oder dergleichen getankt wird, daß hohe Kraftstoffpermeationsraten und ein hohes Maß an Verdampfungsverlusten des Kraftstoffs auftreten. Insbesondere die Verdampfungsprodukte sind mitunter sehr schädlich.

Aufgrund immer strenger werdender gesetzlicher Regelungen besteht die Notwendigkeit, Tanksysteme zu schaffen, bei denen die Kraftstoffemissionen auf ein Minimum reduziert werden können. Bisher werden für solche Fälle komplizierte Entlüftungs- und Belüftungstechniken sowie aufwendige Dichtungssysteme verwendet. Derartige Techniken umfassen beispielsweise Aktivkohlefilter. Aktivkohlefilter benötigen jedoch eine Reihe von Anschlüssen und Entlüftungsleitungen, was mit einem hohen konstruktiven Aufwand und entsprechend erhöhten Kosten verbunden ist. Durch die relativ hohe Zahl an erforderlichen Anschlüssen und Anschlußstutzen wird weiterhin auch die Gefahr möglicher Kraftstofflecks gesteigert. Da die Kraftstofftanks in der Regel eine aufwendige geometrische Kontur aufweisen, sind weiterhin eine Reihe von Kraftstoffpumpen erforderlich, um den im Kraftstofftank befindlichen Kraftstoff zum Auslaß des Kraftstofftanks transportieren zu können. Die Pumpen verbrauchen jedoch Energie und führen zu einem komplizierten Aufbau des Kraftstofftanks.

Eine Anordnung in einem Fahrzeug zum Speichern von flüssigem Kraftstoff mit den Merkmalen des Oberbegriffs des Anspruchs 1 ist aus DE-A-4 132 744 bekannt.

Ausgehend vom genannten Stand der Technik liegt der vorliegenden Erfindung die Aufgabe zugrunde, eine wie eingangs beschriebene Anordnung zum Speichern von Kraftstoffen derart weiterzubilden, daß die oben genannten Nachteile vermieden werden. Insbesondere soll eine Anordnung zum Speichern von Kraftstoff bereitgestellt werden, mit der auf einfache und kostengünstige Weise Kraftstoff gespeichert werden kann, ohne daß es zu Kraftstoffemissionen kommt. Darüber hinaus soll auch eine effektive Abgabe von Kraftstoff möglich werden. Weiterhin soll auch ein entsprechend verbessertes Verfahren zum Betreiben eines Kraftstofftanks bereitgestellt werden.

Die Aufgabe wird gemäß dem ersten Aspekt der Erfindung durch eine Anordnung einem Fahrzeug, zum Speichern von Kraftstoff, mit den Merkmalen des Anspruch 1 gelöst.

Durch eine solche Anordnung können die im Stand der Technik beschriebenen Nachteile vermieden werden. Durch die Anordnung wird ein geschlossenes Tanksystem geschaffen, bei dem die Kraftstoffemissionen auf ein Minimum reduziert werden können.

Der Grundgedanke der vorliegenden Erfindung besteht darin, daß die Belüftungs- und Entlüftungsproblematik dadurch gelöst wird, daß das im Kraftstofftank befindliche Gas vor dem Beginn des Betankungsvorgangs und während der Betankung mit Hilfe einer Fördereinrichtung in einen separaten Druckbehälter befördert wird. Dadurch wird ein im Kraftstofftank herrschender Druck abgebaut. Der Druckbehälter kann beispielsweise -jedoch nicht ausschließlich- auf 60 bar ausgelegt sein.

Die Erfindung ist nicht auf besondere Fördereinrichtungen beschränkt, so daß verschiedene Lösungen denkbar sind. Vorteilhaft wird jedoch eine Pumpe eingesetzt. Die Pumpe regelt den Gasinnendruck des Druckbehälters so, daß eine Angleichung des Kraftstofftanks an den außen anliegenden Druck erfolgt, um eine Betankung des Kraftstofftanks zu ermöglichen. Wenn der im Kraftstofftank während des Betriebs herrschende Druck etwa 4 bar beträgt, kann durch die Pumpe eine Reduzierung des Drucks im Kraftstoffbehälter von diesen 4 bar auf Umgebungsdruck erfolgen. Durch das Abpumpen des im Kraftstofftank befindlichen Gases wird erreicht, daß dieses beim späteren Betankungsvorgang nicht aus dem Kraftstofftank nach außen austreten kann. Weiterhin wird die Pumpe auch während des Betankungsvorgangs weiterbetrieben. Dadurch wird erreicht, daß sich im Kraftstofftank ein Unterdruck ausbildet, wodurch gewährleistet wird, daß auch während des Betankungsvorgangs keine Kraftstoffgase abdampfen können.

Bei der Pumpe handelt es sich vorteilhaft um eine leistungsoptimierte Pumpe. Die Fördermenge der Pumpe kann je nach Bedarf beliebig ausgewählt werden. Wichtig ist lediglich, daß die Fördermenge der Pumpe auf die maximale Betankungsgeschwindigkeit abgestimmt ist.

Der Kraftstofftank kann eine beliebige Form aufweisen. Da die Anordnung vorzugsweise als druckbeaufschlagtes Tanksystem zum Speichem von Kraftstoffen verwendet wird, kann der Kraftstofftank vorteilhaft in Vollkunststoff-Composite-Bauweise druckfest hergestellt sein. Solche Kraftstofftanks können Betriebsdrücken von beispielsweise 4 bar und mehr standhalten.

Der Kraftstofftank kann als Einkammer- oder Mehrkammertank ausgebildet sein. Die Kraftstoffentnahme über den Kraftstofftankauslaß erfolgt in der Regel an der niedrigsten Stelle. Bei einem Mehrkammertank oder bei komplizierten Kraftstofftankformen wird der Kraftstofftransport zum niedrigsten Punkt des Systems beispielsweise über kommunizierende Röhren erreicht. Diese Röhren sollten in den Kraftstofftank integriert werden, um die Kraftstoff-Permeationsraten klein zu halten. Es sind aber auch flexible kommunizierende Röhren denkbar, die nicht in den Kraftstofftank eingespritzt sind, aber als flexible Röhren einen Niveauausgleich ermöglichen.

Grundsätzlich ist die Erfindung nicht auf bestimmte Kraftstofftypen beschränkt. Es kann somit jeder flüssige Kraftstoff verwendet werden. Zwei Beispiele für geeignete Kraftstoffe sind Benzin und Methanol.

Im Rahmen der Methanoleinführung als Kraftstoff für Brennstoffzellenfahrzeuge bietet sich durch die erfindungsgemäße Anordnung eine völlig neue Tankkonzeption an. Etwaige Unverträglichkeiten für die Umwelt oder Gefährdungen durch Methanol können ausgeschlossen werden, da die erfindungsgemäße Anordnung als geschlossenes System ausgebildet ist. Eine solche Einführung und die Möglichkeit, bei konventionellen Anordnungen zum Speichern von Kraftstoff die Kraftstoffemissionen erheblich reduzieren zu können, sind zwei besondere Vorteile der erfindungsgemäßen Anordnung.

Durch die erfindungsgemäße Anordnung werden weiterhin erhebliche konstruktive und kostenmäßige Vorteile erreicht. So kann beispielsweise der bisher notwendige Aktivkohlefilter entfallen und damit auch dessen aufwendige Belüftungs- und Entlüftungstechnik einschließlich der dafür notwendigen Ventile. Ein Luftaustausch mit der Atmosphäre findet bei der erfindungsgemäßen Anordnung nicht statt. Darüber hinaus entfallen eine Reihe von Anschlußstutzen, die immer auch potentielle Lecks darstellen, so daß sich auch hieraus eine Minimierung der Kraftstoffabdampfrate ergibt.

Die erfindungsgemäße Anordnung kann vorteilhaft in Fahrzeugen, beispielsweise Land-, Waser- oder Luftfahrzeugen verwendet werden. Dabei ist die Erfindung nicht auf bestimmte Fahrzeugtypen beschränkt. Vorteilhaft wird die Erfindung jedoch bei Landfahrzeugen wie Automobilen oder dergleichen eingesetzt.

Bevorzugte Ausführungsformen der Anordnung ergeben sich aus den Unteransprüchen.

Vorzugsweise ist ein Druckregler vorgesehen, der mit dem Druckbehälter und dem Kraftstofftank verbunden ist. Über einen solchen Druckregler kann die Kraftstofförderung aus dem Kraftstofftank erfolgen. Dazu wird das in dem Druckbehälter befindliche Gas in den Kraftstofftank nach dessen Betankung eingefüllt. Der Kraftstofftank wird somit aus dem Druckbehälter über den Druckregler mit einem Druck, der beispielsweise größer als der Systemdruck des Motors ist, beaufschlagt. Durch den herrschenden Druck im Kraftstofftank kann der Kraftstoff auf sehr einfache Weise zum Kraftstofftankauslaß befördert und von diesem dem Motor zur Verfügung gestellt werden.

Bei Verwendung eines wie oben beschrieben Kraftstofftanks kann der Kraftstofftank beispielsweise ein Druckniveau von 4 bar oder mehr nutzen, um den Kraftstoff zum Kraftstofftankauslaß zu fördern. Dadurch können die bisher notwendigen Kraftstoffpumpen entfallen. Der Druckregler kann beispielsweise derart ausgelegt sein, daß er das im Druckbehälter mit einem Druck von 60 bar gespeicherte Gas beim Überströmen in den Kraftstofftank auf einen für den Kraftstofftank erforderlichen Druck von 4 bar regelt. Natürlich ist die Erfindung nicht auf die beschriebenen Druckwerte beschränkt.

In weiterer Ausgestaltung kann der Druckregler ein Ventil, vorzugsweise ein sogenanntes Crash-Ventil, aufweisen. Wenn die Anordnung beispielsweise in einem Fahrzeug eingebaut ist, kann das Ventil im Falle eines Unfalls für einen definierten Druckausgleich mit der Umgebung sorgen. Weiterhin kann das Ventil so ausgebildet sein, daß es den Druckregler im Falle eines Unfalls derart verschließt, daß ein Auslaufen von Kraftstoff aus dem Kraftstofftank verhindert wird.

Vorteilhaft ist die Fördereinrichtung, insbesondere die Pumpe, über ein Ventil, insbesondere ein Schwimmerventil, mit dem Kraftstofftank verbunden. Durch ein solches Ventil wird vermieden, daß flüssiger Kraftstoff in die Pumpe und damit auch in den Druckbehälter gefördert werden kann. Vorteilhaft wird das Ventil so ausgebildet, daß es die Pumpe in einem solchen Fall abschaltet. Das Ventil ist vorzugsweise ein Schwimmerventil mit Reedschalter.

In weiterer Ausgestaltung kann ein Einfüllrohr zum Einfüllen von Kraftstoff in den Kraftstofftank vorgesehen sein, das mit dem Kraftstofftankeinlaß verbunden ist.

Zweckmäßigerweise sollte das Einfüllrohr an seinem freien Ende mit einer Dichteinrichtung und/oder einem Tankverschluß verbunden sein.

Über die Dichteinrichtung (mechanical seal) kann während des Betankungsvorgangs beispielsweise eine Zapfpistole derart abgedichtet werden, daß ein Abdampfen von Kraftstoff vermieden wird. Die Dichteinrichtung kann beispielsweise als mechanische Kunststoffdichtung ausgebildet sein.

Der das Einfüllrohr und damit die gesamte Anordnung verschließende Tankverschluß kann beispielsweise derart mit der Fördereinrichtung gekoppelt sein, daß bei seiner Betätigung auch die Fördereinrichtung in Betrieb gesetzt wird, um vor Beginn des Betankungsvorgangs die im Kraftstofftank befindlichen Gase zunächst abzupumpen und den im Kraftstofftank befindlichen Druck zu reduzieren. Die Kopplung des Tankverschlusses mit der Fördereinrichtung kann dabei so eingestellt sein, daß sich der Tankverschluß erst dann öffnen läßt, wenn im Kraftstofftank kein Überdruck mehr vorhanden ist.

Vorzugsweise weist das Einfüllrohr einen oder mehrere, vorzugsweise zwei Sensoren zur Messung des Kraftstoffspiegels auf. Über diese Sensoren kann der Betrieb der Fördereinrichtung während des Betankungsvorgangs gesteuert werden. Wurde mit der Betätigung des Tankverschlusses beispielsweise die Fördereinrichtung so gesteuert, daß der Überdruck im Kraftstofftank abgebaut wurde, können die Sensoren dazu dienen, daß der Druck im Kraftstofftank über die Fördereinrichtung noch weiter abgebaut wird, so daß ein Unterdruck im Kraftstoffbehälter entsteht. Dieser Unterdruck verhindert, daß Kraftstoffdämpfe während des Betankungsvorgangs aus dem Einfüllrohr nach außen entweichen können.

Überschreitet der Kraftstoffspiegel im Einfüllrohr beispielsweise eine durch einen solchen Sensor gebildete obere Marke, wird die Fördereinrichtung in Betrieb gesetzt. Hat der Kraftstoffspiegel jedoch eine durch einen anderen Sensor gebildete untere Marke erreicht, wird die Fördereinrichtung abgeschaltet. Die Laufzeit der Fördereinrichtung, etwa die Pumplaufzeit, wird in diesem Fall über eine durch die vorzugsweise zwei Sensoren gebildete Minimal-/Maximalregelung gesteuert. Natürlich sind auch andere Regelungsarten denkbar, die beispielsweise nur einen Sensor oder aber mehr als zwei Sensoren aufweisen.

in weiterer Ausgestaltung kann das Einfüllrohr einen Siphon aufweisen. Durch Verwendung eines solchen Siphons kann verhindert werden, daß während des Betankungsvorgangs mit Kraftstoff Luft aus der Atmosphäre in den Kraftstofftank und über diesen in den Druckbehälter befördert wird.

Vorzugsweise kann ein Verschließelement zum Verschließen des Kraftstofftankeinlasses vorgesehen sein. Das Verschließelement verhindert einen durch den Kraftstofftank bedingten Überdruck im Einfüllrohr. Wenn das Verschließelement beispielsweise als Klappe ausgebildet ist, wird der Kraftstofftankeinlaß infolge des Eigengewichts der Klappe, die vorteilhaft schwenkbar angeordnet ist, und des Druckes aus dem Tankinnern wie bei einem Rückschlagventil durch die Klappe verschlossen.

Vorteilhaft weist der Druckbehälter einen oder mehrere Drucksensoren auf. Über einen Drucksensor kann beispielsweise ermittelt werden, ob in dem Druckbehälter Flüssigkeit auskondensiert. Ist dies der Fall, wird die Flüssigkeit über den Drucksensor detektiert und über eine geeignet Vorrichtung, beispielsweise über einen Beipaß, wieder in den Kraftstofftank befördert.

Ein Drucksensor kann aber auch zur Bestimmung des Füllstands im Kraftstofftank verwendet werden. Dies kann über eine indirekte Messung des Druckverlaufs im Druckbehälter erfolgen. Dazu wird eine bestimmte Druckkennlinie des Druckbehälters hinterlegt, die mit dem Füllstand korrespondiert und mit der die vom Drucksensor gemessenen Druckwerte verglichen werden. Zur Kalibrierung der Messung können im Kraftstofftank Eichpunkte angebracht werden.

Je nach Bedarf können die beiden unterschiedlichen Messungen von einem oder von mehreren Drucksensoren durchgeführt werden.

In weiterer Ausgestaltung kann der Druckbehälter mit einem Regenerierventil verbunden sein. Sollte Luft aus der Atmosphäre in den Druckbehälter gelangen, kann dies über eine Drucküberwachung im Druckbehälter, die Schaltung des Ventils für die Fördereinrichtung oder die indirekte Füllstandsanzeige festgestellt werden. Diese Luft kann dann kontrolliert über das Regenerierventil abgeführt und dem Motor zugeführt werden.

Vorzugsweise ist weiterhin ein Druckregler vorgesehen, der mit dem Kraftstofftankauslaß verbunden ist. Über diesen Druckregler, der den im Kraftstofftank herrschenden Druck auf den Systemdruck des Motors herunterregelt, wird dem Motor der Kraftstoff aus dem Kraftstofftank zugeführt.

Gemäß dem zweiten Aspekt der vorliegenden Erfindung wird ein Verfahren zum Betreiben eines Kraftstofftanks, der einen Kraftstofftankeinlaß und einen Kraftstofftankauslaß aufweist, bereitgestellt, das insbesondere unter Verwendung einer wie vorstehend beschriebenen erfindungsgemäßen Anordnung ausgeführt werden kann. Das Verfahren ist gekennzeichnet durch folgende Schritte:
a) Zu Beginn eines Befüllvorgangs des Kraftstofftanks Abpumpen von im Kraftstofftank befindlichen Gasen über eine Fördereinrichtung, insbesondere eine Pumpe, in einen separaten Druckbehälter, wodurch der Druck im Kraftstofftank reduziert wird;
b) Einfüllen von Kraftstoff in den Kraftstofftank unter gleichzeitigem weiterem Betreiben der Fördereinrichtung;
c) nach Beendigung des Befüllvorgangs Abschalten der Fördereinrichtung und Verschließen des Kraftstofftankeinlasses über ein geeignetes Verschließelement.

Durch ein solches Verfahren wird es auf einfache und kostengünstige Weise möglich, einen Kraftstoffbehälter mit Kraftstoff zu betanken, ohne daß es zu nachteiligen Kraftstoffemissionen in die Umgebung kommt. Zu den Vorteilen, Wirkungen, Effekten und zur Funktionsweise des Verfahrens sowie seinen in den Unteransprüchen beschriebenen bevorzugten Ausgestaltungsformen wird auf die vorstehenden Ausführungen zur erfindungsgemäßen Anordnung vollinhaltlich Bezug genommen und hiermit verwiesen.

Vorteilhaft wird das Verfahren mit Betätigung des Tankverschlusses begonnen, wodurch die Fördereinrichtung in Betrieb gesetzt und das Gas aus dem Kraftstofftank in den Druckbehälter abgepumpt wird. Die Fördereinrichtung ist beispielsweise als Pumpe ausgebildet, die das Gas in den Druckbehälter mit einer Auslegung von beispielsweise 60 bar pumpt. Die Pumpe regelt den Gasinnendruck des Druckbehälters beispielsweise so, daß eine Angleichung des Drucks im Kraftstofftank an den außen anliegenden Druck erfolgt, um eine Betankung des Kraftstofftanks zu ermöglichen. Dies erfolgt in der Regel durch ein Reduzieren des Gasdrucks im Innenraum des Kraftstofftanks von beispielsweise 4 bar oder mehr auf Umgebungsdruck. Bei weiterem Betrieb der Fördereinrichtung auch während des Betankungsvorgangs wird der Druck im Kraftstofftank noch weiter -und damit auf einen Unterdruck- abgesenkt, so daß gewährleistet ist, daß auch während des Betankungsvorgangs keine Kraftstoffgase in die Umgebung abdampfen können.

Bevorzugte Ausführungsformen des Verfahrens ergeben sich aus den Unteransprüchen.

Vorteilhaft wird zum Entladen des Kraftstofftanks das im Druckbehälter befindliche Gas in den Kraftstofftank eingeleitet, vorzugsweise über einen Druckregler. Der unter Druck stehende Kraftstoff wird dann über den Kraftstofftankauslaß abgeleitet. Zur Kraftstofförderung wird der Kraftstofftank somit mit einem Druck, der größer als der Kraftstsoff-Systemdruck des Motors ist, beaufschlagt. Ein solcher Druck beträgt beispielsweise 4 bar oder mehr.

In weiterer Ausgestaltung kann der Druck des aus dem Kraftstofftankauslaß austretenden Kraftstoffs über einen Druckregler geregelt werden. Dieser Druckregler reduziert den im Kraftstofftank herrschenden Druck auf den Kraftstoff-Systemdruck des Motors.

Vorteilhaft kann der Kraftstoff über ein Einfüllrohr, das mit dem Kraftstofftankeinlaß verbunden ist, in den Kraftstofftank eingeleitet werden.

Die Fördereinrichtung wird vorzugsweise zu Beginn des Befüllvorgangs über die Betätigung des Tankverschlusses in Betrieb gesetzt. Weiterhin kann der Betrieb der Fördereinrichtung während der Zufuhr von Kraftstoff über das Einfüllrohr vorteilhaft über einen oder mehrere, vorzugsweise zwei im Einfüllrohr befindliche Sensoren zur Messung des Flüssigkeitsspiegels im Einfüllrohr geregelt werden.

In weiterer Ausgestaltung kann der im Druckbehälter und/oder der im Kraftstofftank herrschende Druck über einen oder mehrere Drucksensoren gemessen werden.

Vorteilhaft kann der Kraftstoff bei der Einleitung in den Kraftstofftank über einen in dem Einfüllrohr befindlichen Siphon geleitet werden.

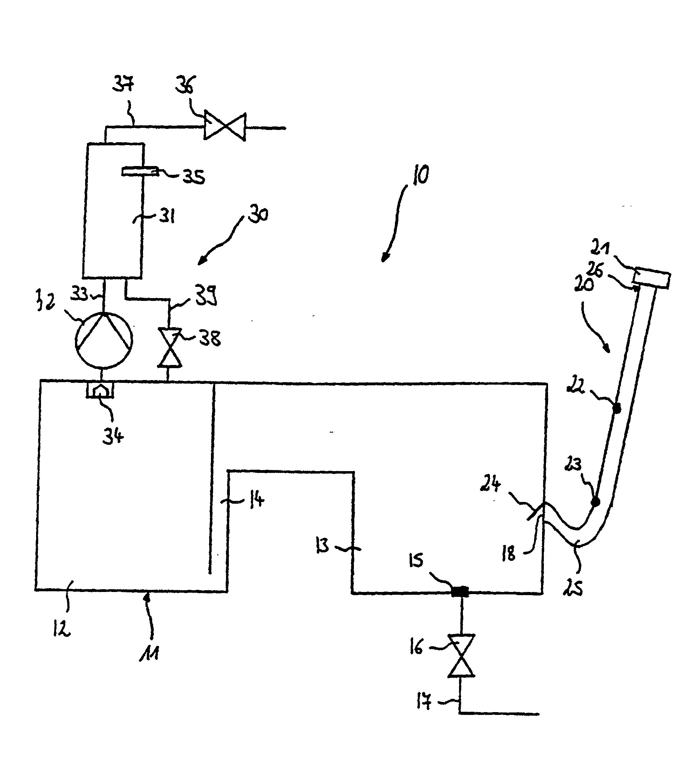

Die Erfindung wird nun auf exemplarische Weise anhand eines Ausführungsbeispiels unter Bezugnahme auf die beiliegende Zeichnung näher erläutert. Die einzige Figur zeigt eine schematische Schaltungsanordnung einer erfindungsgemäßen Anordnung zum Speichern von Kraftstoff.

In der Figur ist eine Anordnung 10 zum Speichern von Kraftstoff, beispielsweise von Benzin dargestellt. Die Anordnung 10 weist einen Kraftstofftank 11 auf, der in Vollkunststoff-Composite-Bauweise druckfest bis zu einem Druck von mindestens vier bar hergestellt ist. Der Kraftstofftank 11 weist einen Krafstofftankeinlaß 18 und einen Kraftstofftank-Auslaß 15 auf. Über den Kraftstofftankeinlaß 18 ist der Kraftstofftank 11 mit einem Einfüllrohr 20 verbunden.

Das Einfüllrohr 20 weist einen Siphon 25 auf und ist an seinem freien Ende 26 durch einen Tankdeckel 21 verschließbar. Weiterhin sind im Einfüllrohr 20 zwei Sensoren 22 und 23 zur Steuerung einer Fördereinrichtung 32 vorgesehen. Der Kraftstofftankeinlaß 18 ist über ein Verschließelement 24, das als schwenkbare Klappenanordnung im Sinne eines Rückschlagventils ausgebildet ist, verschließbar.

Der Kraftstofftank 11 ist als Zweikammertank ausgebildet und verfügt somit über zwei Tankkammem 12 und 13. Die Tankkammem 12 und 13 sind über eine kommunizierende Röhre 14 miteinander verbunden.

Der Krafstofftankauslaß 15 ist an der niedrigsten Stelle des Kraftstofftanks 11 angeordnet. Er ist über eine Leitung 17 und einen in dieser Leitung vorgesehenen Druckregler 16 mit einem nicht dargestellten Motor verbunden.

Der Kraftstofftank 11 ist weiterhin mit einem Drucksystem 30 verbunden. Das Drucksystem 30 weist einen Druckbehälter 31 auf, der auf einen Druck von etwa 60 bar ausgelegt ist und der über eine als Pumpe ausgelegte Fördereinrichtung 32 und eine entsprechende Leitung 33 mit dem Kraftstofftank 11 verbunden ist. Zwischen dem Kraftstofftank 11 und der Pumpe 32 ist weiterhin ein Schwimmerventil 34 vorgesehen.

Der Druckbehälter 31 ist zusätzlich über eine Leitung 39 und einen Druckregler 38 mit dem Kraftstofftank 11 verbunden. Zur Messung eines Drucks im Druckbehälter 31 selbst ist ein Drucksensor 35 vorgesehen. Der Druckbehälter 31 ist schließlich noch über ein in einer Leitung 37 angeordnetes Regenerierventil 36 mit dem nicht dargestellten Motor verbunden.

Nachfolgend wird nun die Funktionsweise der Anordnung 10 beschrieben.

Um die Betankung des Kraftstofftanks 11 vorzunehmen, wird bei Betätigung des Tankverschlusses 21 die Pumpe 32 in Betrieb gesetzt, wodurch die im Kraftstofftank 11 befindlichen Gase in den Druckbehälter 31 gepumpt werden und somit der Druck im Kraftstofftank 11 abgebaut wird. Öffnen läßt sich der Tankverschluß 21 erst dann, wenn im Kraftstofftank 11 kein Überdruck mehr vorhanden ist. Ein Überdruck im Einfüllrohr 20 wird dadurch vermieden, daß die Klappe 24 das Einfüllrohr 20 aufgrund ihres Eigengewichts und des im Kraftstofftank 11 herrschenden Innendrucks zunächst verschließt.

Wenn der Druck im Kraftstofftank 11 von etwa vier bar auf Umgebungsdruck abgesenkt wurde, wird mit der Betankung des Kraftstofftanks 11 begonnen. Dazu wird der Kraftstoff in das Einfüllrohr 20 eingefüllt. Überschreitet der Kraftstoffspiegel im Einfüllrohr 20 die durch den Sensor 22 gesetzte obere Marke, wird die Pumpe 32 weiter betrieben, wodurch im Kraftstofftank 11 ein Unterdruck entsteht und der Kraftstoff in diesen hineingesaugt wird. Dadurch können keine Kraftstoffdämpfe nach außen entweichen. Die kommunizierende Röhre 14 sorgt für eine Befüllung beider Kammern 12, 13 des Kraftstofftanks 11. Wird bei Beendigung des Betankungsvorgangs, nachdem die Kraftstoffzufuhr abgestellt wurde, vom Kraftstoffspiegel eine durch den Sensor 23 gebildete untere Marke erreicht, wird acuh die Pumpe 32 abgeschaltet.

Damit keine Luft aus der Atmosphäre in den Kraftstofftank 11 und über diesen in den Druckbehälter 31 gepumpt wird, weist das Einfüllrohr 20 den Siphon 25 auf. Eine für das Betanken eventuell verwendete Zapfpistole wird im freien Ende 26 des Einfüllrohrs 20 beispielsweise durch eine nicht dargestellte Dichteinrichtung abgedichtet.

Damit kein Kraftstoff in den Druckbehälter 31 gepumpt wird, ist der Zulauf 33 zum Druckbehälter 31 mit einem Schwimmerventil 34 mit Reedschalter, der die Pumpe 32 abschalten kann, gesichert.

Kondensiert Flüssigkeit im Druckbehälter 31 aus, wird sie über eine geeignete Vorrichtung zurück in den Kraftstofftank 11 geleitet.

Sollte Luft aus der Atmosphäre in den Druckbehälter 31 gelangen, kann dies über die Drucküberwachung im Druckbehälter 31 mittels des Drucksensors 35, die Schaltung des Schwimmerventils 34 oder dergleichen festgestellt werden. Die Luft kann dann kontrolliert über das Regenerierventil 36 dem Motor zugeführt werden.

Die Kraftstofförderung erfolgt nun in einer Art und Weise, daß der Kraftstofftank 11 aus dem Druckbehälter 31 über den Druckregler 38 mit einem Druck, der größer ist als der Kraftstoff Systemdruck des Motors, beaufschlagt wird. Der Druckregler 38 regelt beispielsweise den im Druckbehälter 31 herrschenden Gasdruck von etwa sechzig bar auf die für den Kraftstofftank 11 erforderlichen vier bar. Der Druckregler 38 verfügt über ein Crash-Ventil, das im Falle eines Unfalls den Druckregler 38 verschließt und ein Auslaufen von Kraftstoff aus dem Kraftstofftank verhindert.

Die Kraftstoffentnahme erfolgt an der niedrigsten Stelle des Krafstofftanks 11, nämlich am Kraftstofftankauslaß 15. Die kommunizierende Röhre 14 stellt sicher, daß die Kraftstoffentnahme aus beiden Kammern 12, 13 des Kraftstofftanks 11 erfolgt. Der Druckregler 16 hat dabei die Aufgabe, den unter einem Druck von etwa vier bar stehenden Kraftstoff auf den Kraftstoff-Systemdruck des Motors herunterzuregeln. Der so druckgeregelte Kraftstoff wird über die Leitung 17 zum Motor geleitet.

### Bezugszeichenliste

- 10 =: Anordnung zum Speichern von Kraftstoff
- 11 =: Kraftstofftank
- 12 =: Tankkammer
- 13 =: Tankkammer
- 14 =: kommunizierende Röhre
- 15 =: Kraftstofftankauslaß
- 16 =: Druckregler
- 17 =: Kraftstoffleitung (zum Motor)
- 18 =: Kraftstofftankeinlaß

- 20 =: Einfüllrohr
- 21 =: Tankverschluß
- 22 =: Sensor (max.)
- 23 =: Sensor (min.)
- 24 =: Verschließelement/Klappe
- 25 =: Siphon
- 26 =: freies Ende

- 30 =: Drucksystem
- 31 =: Druckbehälter
- 32 =: Fördereinrichtung/Pumpe
- 33 =: Leitung
- 34 =: Schwimmerventil
- 35 =: Drucksensor
- 36 =: Regenerierventil
- 37 =: Leitung
- 38 =: Druckregler
- 39 =: Leitung

## Patentansprüche

1. Anordnung in einem Fahrzeug zum Speichern von flüssigem Kraftstoff, mit einem Kraftstofftank (11), der einen Kraftstofftankeinlaß (18) und einen Kraftstofftankauslaß (15) aufweist, wobei ein Druckbehälter (31) zum Speichern von Gasen und eine Fördereinrichtung, insbesondere eine Pumpe (32), vorgesehen sind und die Druckseite der Fördereinrichtung mit dem Druckbehälter (31) und die Saugseite der Fördereinrichtung mit dem Kraftstofftank (11) verbunden ist und wobei eine Leitung (39) mit einem Druckregler (38) vorgesehen ist, die mit dem Druckbehälter (31) und dem Kraftstofftank (11) verbunden ist,
**dadurch gekennzeichnet,**
**daß** der Druckregler (38) darauf eingerichtet ist, daß zur Kraftstoffentnahme der Kraftstofftank (11) aus dem Druckbehälter (31) mit einem Druck beaufschlagt wird, der größer ist als der Kraftstoff-Sytemdruck des Motors des Fahrzeugs, und daß zur Betankung der Druck im Kraftstofftank (11) zunächst mittels der Fördereinrichtung durch Abpumpen des im Kraftstofftank (11) befindlichen Gases auf den Umgebungsdruck abgesenkt wird.

2. Anordnung nach Anspruch 1.
**dadurch gekennzeichnet,**
**daß** der Kraftstofftank (11) auf einen Betriebsdruck von 4 bar und/oder der Druckbehälter (31) auf einen Betriebsdruck von 60 bar ausgelegt ist.

3. Anordnung nach Anspruch 1 oder 2,
**dadurch gekennzeichnet,**
**daß** der Druckregler (38) ein Ventil, insbesondere ein Crash-Ventil, aufweist.

4. Anordnung nach einem der Ansprüche 1 bis 3,
**dadurch gekennzeichnet,**
**daß** die Fördereinrichtung, insbesondere die Pumpe (32), über ein Ventil, insbesondere ein Schwimmerventil (34), mit dem Kraftstofftank (11) verbunden ist.

5. Anordnung nach einem der Ansprüche 1 bis 4,
**dadurch gekennzeichnet,**
**daß** ein Einfüllrohr (20) zum Einfüllen des Kraftstoffs in den Kraftstofftank (11) vorgesehen ist, das mit dem Kraftstofftankeinlaß (18) verbunden ist.

6. Anordnung nach Anspruch 5,
**dadurch gekennzeichnet,**
**daß** das Einfüllrohr (20) an seinem freien Ende (26) mit einer Dichteinrichtung und/oder einem Tankverschluß (21) verbunden ist.

7. Anordnung nach Anspruch 5 oder 6,
**dadurch gekennzeichnet,**
**daß** das Einfüllrohr (20) einen oder mehrere, vorzugsweise zwei Sensoren (22, 23) zur Messung des Flüssigkeitsstandes aufweist.

8. Anordnung nach einem der Ansprüche 5 bis 7,
**dadurch gekennzeichnet,**
**daß** das Einfüllrohr (20) einen Siphon (25) aufweist.

9. Anordnung nach einem der Ansprüche 1 bis 8,
**dadurch gekennzeichnet,**
**daß** ein Verschließelement (24) zum Verschließen des Kraftstofftankeinlasses (18) vorgesehen ist

10. Anordnung nach einem der Ansprüche 1 bis 9,
**dadurch gekennzeichnet,**
**daß** der Druckbehälter (31) einen oder mehrere Drucksensoren (35) aufweist.

11. Anordnung nach einem der Ansprüche 1 bis 10,
**dadurch gekennzeichnet,**
**daß** der Druckbehälter (31) mit einem Regenerierventil (36) verbunden ist.

12. Anordnung nach einem der Ansprüche 1 bis 11,
**dadurch gekennzeichnet,**
**daß** ein Druckregler (16) vorgesehen ist, der in eine mit dem Kraftstofftankauslaß (15) verbundene Kraftstoffleitung (17) zur Regelung des Kraftstoffdrucks eingeschaltet ist.

13. Verfahren zum Betreiben eines Kraftstofftanks, der einen Kraftstofftankeinlaß und einen Kraftstofftankauslaß ausweist, insbesondere unter Verwendung einer Anordnung nach einem der Ansprüche 1 bis 12,
mit folgenden Schritten:
a) Vor Beginn eines Befüllvorgangs des Kraftstofftanks Abpumpen von im Kraftstofftank befindlichen Gasen über eine Fördereinrichtung, insbesondere eine Pumpe, in einen separaten Druckbehälter, wodurch der Druck im Kraftstofftank reduziert wird;
b) Einfüllen von Kraftstoff in den Kraftstofftank unter gleichzeitigem weiterem Betreiben der Fördereinrichtung;
c) nach Beendigung des Befüllvorgangs Abschalten der Fördereinrichtung und Verschließen des Kraftstofftankeinlasses über ein geeignetes Verschließelement;
d) Einleitung von Gas aus dem Druckbehälter in den Kraftstofftank und Ableitung des unter Druck stehenden Kraftstoffs über den Kraftstoffauslaß ohne gesonderte Kraftstoffpumpe.

14. Verfahren nach Anspruch 13,
**dadurch gekennzeichnet,**
**daß** der Kraftstofftank (11) mit einem Druck von 4 bar oder mehr und/oder der Druckbehälter (31) mit einem Druck von 60 bar betrieben wird.

15. Verfahren nach Anspruch 13 oder 14,
**dadurch gekennzeichnet,**
**daß** der Druck des aus dem Kraftstofftankauslaß austretenden Kraftstoffs über einen Druckregler geregelt wird.

16. Verfahren nach einem der Ansprüche 13 bis 15,
**dadurch gekennzeichnet,**
**daß** der Kranstoff über ein Einfüllrohr, das mit dem Kraftstofftankeinlaß verbunden ist, in den Kraftstofftank eingeleitet wird.

17. Verfahren nach einem der Ansprüche 13 bis 16,
**dadurch gekennzeichnet,**
**daß** die Fördereinrichtung zu Beginn des Befüllvorgangs über die Betätigung eines Tankverschlusses in Betrieb gesetzt wird.

18. Verfahren nach Anspruch 16 oder 17,
**dadurch gekennzeichnet,**
**daß** der Betrieb der Fördereinrichtung während der Zufuhr von Kraftstoff über das Einfüllrohr über einen oder mehrere, vorzugsweise zwei Sensoren zur Messung des Flüssigkeitsstandes geregelt wird.

19. Verfahren nach einem der Ansprüche 13 bis 18,
**dadurch gekennzeichnet,**
**daß** über einen oder mehrere Drucksensoren der im Druckbehälter herrschende Druck gemessen und zur Bestimmung des Füllstandes im Kraftstofftank benutzt wird.

20. Verfahren nach einem der Ansprüche 16 bis 19,
**dadurch gekennzeichnet,**
**daß** der Kraftstoff bei der Einleitung in den Kraftstofftank über einen im Einfüllrohr befindlichen Siphon geleitet wird.

21. Verfahren nach einem der Ansprüche 13 bis 20,
**dadurch gekennzeichnet,**
**daß** die Einleitung des Gases aus dem Druckbehälter druckgeregelt erfolgt.

## Claims

1. Arrangement in an automotive vehicle for storing liquid fuel, with a fuel tank (11) which has a fuel tank inlet (18) and a fuel tank outlet (15), a pressure container (31) for storing gases and a delivery device, in particular a pump (32), being provided, and the pressure side of the delivery device being connected to the pressure container (31) and the suction side of the delivery device being connected to the fuel tank (11), and a line (39) being provided with a pressure controller (38), which line is connected to the pressure container (31) and to the fuel tank (11),
charactérised in that
the pressure controller (38) is provided such that the fuel tank (11) is subjected to a pressure from the pressure container (31) in order to remove the fuel, which pressure is greater than the fuel system pressure of the engine of the automotive vehicle, and in that, for refuelling, the pressure in the fuel tank (11) is first lowered to the atmospheric pressure by means of the delivery device by pumping out the gas which is situated in the fuel tank (11).

2. Arrangement according to claim 1,
**characterised in that**
the fuel tank (11) is designed for an operational pressure of 4 bar and/or the pressure container (31) is designed for an operational pressure of 60 bar.

3. Arrangement according to claim 1 or 2,
**characterised in that**
the pressure controller (38) is a valve, in particular a crash valve.

4. Arrangement according to one of the claims 1 to 3,
**characterised in that**
the delivery device, in particular the pump (32), is connected to the fuel tank (11) via a valve, in particular via a ball valve (34).

5. Arrangement according to one of the claims 1 to 4,
**characterised in that**
a filler pipe (20) for filling fuel into the fuel tank (11) is provided, which filler pipe is connected to the fuel tank inlet (18).

6. Arrangement according to claim 5,
**characterised in that**
the filler pipe (20) is connected at its free end (26) to a sealing device and/or to a tank closure (21).

7. Arrangement according to claim 5 or 6,
**characterised in that**
the filler pipe (20) has one or more, preferably two, sensors (22, 23) in order to measure the liquid level.

8. Arrangement according to one of the claims 5 to 7,
**characterised in that**
the filler pipe (20) has a siphon (25).

9. Arrangement according to one of the claims 1 to 8,
**characterised in that**
a closure element (24) is provided in order to close the fuel tank inlet (18).

10. Arrangement according to one of the claims 1 to 9,
**characterised in that**
the pressure container (31) has one or more pressure sensors (35).

11. Arrangement according to one of the claims 1 to 10,
**characterised in that**
the pressure container (31) is connected to a recovery valve (36).

12. Arrangement according to one of the claims 1 to 11,
**characterised in that**
a pressure controller (16) is provided, which is connected in a fuel line (17), which is connected to the fuel tank outlet (15), in order to control the fuel pressure.

13. Method for operating a fuel tank which has a fuel tank inlet and a fuel tank outlet, in particular by using an arrangement according to one of the claims 1 to 12,
with the following steps:
a) prior to commencing a filling process of the fuel tank, pumping out the gases which are situated in the fuel tank via a delivery device, in particular via a pump, into a separate pressure container, by means of which the pressure in the fuel tank is reduced;
b) filling fuel into the fuel tank with simultaneous further operation of the delivery device;
c) after completing the filling process, switching off the delivery device and closing the fuel tank inlet via a suitable closure element;
d) introducing gas from the pressure container into the fuel tank and withdrawing the fuel, which is under pressure, via the fuel outlet without a separate fuel pump.

14. Method according to claim 13,
**characterised in that**
the fuel tank (11) is operated with a pressure of 4 bar or more and/or the pressure container (31) is operated with a pressure of 60 bar.

15. Method according to claim 13 or 14,
**characterised in that**
the pressure of the fuel which emerges from the fuel tank outlet is controlled via a pressure controller.

16. Method according to one of the claims 13 to 15
**characterised in that**
the fuel is introduced into the fuel tank via a filler pipe which is connected to the fuel tank inlet.

17. Method according to one of the claims 13 to 16,
**characterised in that**
the delivery device is set in operation at the commencement of the filling process via the actuation of a tank closure.

18. Method according to claim 16 or 17,
**characterised in that**
the operation of the delivery device during the supply of fuel via the filler pipe is controlled via one or more, preferably two, sensors in order to measure the liquid level.

19. Method according to one of the claims 13 to 18,
**characterised in that**
the pressure which exists in the pressure container is measured via one or more pressure sensors, and is used in order to determine the level in the fuel tank.

20. Method according to one of the claims 16 to 19,
**characterised in that**
the fuel is conducted via a siphon which is situated in the filler pipe during introduction into the fuel tank.

21. Method according to one of the claims 13 to 20,
**characterised in that**
the introduction of the gas from the pressure container is effected in a pressure-controlled manner.

## Revendications

1. Dispositif dans un véhicule pour stocker du carburant liquide, comportant un réservoir de carburant (11), qui présente une entrée (18) de réservoir de carburant et une sortie (15) de réservoir de carburant, un récipient sous pression (31) pour stocker des gaz et un dispositif de transport, en particulier une pompe (32), étant prévus et le côté de pression du dispositif de transport étant relié au récipient sous pression (31) et le côté d'aspiration du dispositif de transport au réservoir de carburant (11) et un conduit (39) étant muni d'un régulateur de pression (38), qui est relié au récipient sous pression (31) et au réservoir de carburant (11),
**caractérisé en ce que** le régulateur de pression (38) est disposé de sorte que, pour évacuer le carburant, le réservoir de carburant (11) est alimenté par une pression à partir du récipient sous pression (31), qui est plus grande que la pression du système de carburant du moteur du véhicule, et **en ce que**, pour le ravitaillement, la pression dans le réservoir de carburant (11) est tout d'abord abaissée à la pression de l'environnement au moyen du dispositif de transport par pompage du gaz se trouvant dans le réservoir de carburant (11).

2. Dispositif selon la revendication 1,
**caractérisé en ce que** le réservoir de carburant (11) est prévu pour une pression de fonctionnement de 4 bars et/ou le récipient sous pression (31) est prévu pour une pression de fonctionnement de 60 bars.

3. Dispositif selon la revendication 1 ou 2,
**caractérisé en ce que** le régulateur de pression (38) présente une valve, en particulier une valve de collision.

4. Dispositif selon une des revendications 1 à 3,
**caractérisé en ce que** le dispositif de transport, en particulier la pompe (32), est relié au réservoir de carburant (11) par l'intermédiaire d'une valve, en particulier une valve à flotteur (34).

5. Dispositif selon une des revendications 1 à 4,
**caractérisé en ce qu'**un tube de remplissage (20) est prévu pour remplir de carburant le réservoir de carburant (11), qui est relié à l'entrée (18) du réservoir de carburant.

6. Dispositif selon la revendication 5,
**caractérisé en ce que** le tube de remplissage (20), à son extrémité libre (26), est relié à un dispositif d'étanchéité et/ou une fermeture de réservoir (21).

7. Dispositif selon la revendication 5 ou 6,
**caractérisé en ce que** le tube de remplissage (20) présente un ou plusieurs, avantageusement deux, capteurs (22, 23) pour mesurer le niveau du liquide.

8. Dispositif selon une des revendications 5 à 7,
**caractérisé en ce que** le tube de remplissage (20) présente un siphon (25).

9. Dispositif selon une des revendications 1 à 8,
**caractérisé en ce qu'**un élément de fermeture (24) pour fermer l'entrée (18) du réservoir de carburant est prévu.

10. Dispositif selon une des revendications 1 à 9,
**caractérisé en ce que** le récipient sous pression (31) présente un ou plusieurs capteurs de pression (35).

11. Dispositif selon une des revendications 1 à 10,
**caractérisé en ce que** le récipient sous pression (31) est relié à une valve de régénération (36).

12. Dispositif selon une des revendications 1 à 11,
**caractérisé en ce qu'**un régulateur de pression (16) est prévu, qui est monté dans un conduit de carburant (17) relié à la sortie (15) du réservoir de carburant pour régler la pression du carburant.

13. Procédé pour mettre en oeuvre un réservoir de carburant, qui présente une entrée de réservoir de carburant et une sortie de réservoir de carburant, en particulier en utilisant un dispositif selon une des revendications 1 à 12, comportant les étapes suivantes
a) avant le début d'un processus de remplissage du réservoir de carburant, pompage des gaz se trouvant dans le réservoir de carburant via un dispositif de transport, en particulier une pompe, dans un récipient sous pression séparé, grâce à quoi la pression dans le réservoir de carburant est réduite ;
b) remplissage du carburant dans le réservoir de carburant en continuant à mettre en oeuvre simultanément le dispositif de transport ;
c) après achèvement du processus de remplissage, séparation du dispositif de transport et fermeture de l'entrée du réservoir de carburant par l'intermédiaire d'un élément de fermeture approprié ;
d) introduction de gaz à partir du récipient sous pression dans le réservoir de carburant et évacuation du carburant sous pression par la sortie de carburant sans pompe de carburant particulière.

14. Procédé selon la revendication 13,
**caractérisé en ce que** le réservoir de carburant (11) est mis en oeuvre avec une pression de 4 bars ou plus et/ou le récipient sous pression (31) avec une pression de 60 bars.

15. Procédé selon la revendication 13 ou 14,
**caractérisé en ce que** la pression du carburant sortant de la sortie du réservoir de carburant est réglée par un régulateur de pression.

16. Procédé selon une des revendications 13 à 15,
**caractérisé en ce que** le carburant est introduit dans le réservoir de carburant par l'intermédiaire d'un tube de remplissage qui est relié à l'entrée du réservoir de carburant.

17. Procédé selon une des revendications 13 à 16,
**caractérisé en ce que** le dispositif de transport est mis en route au début du processus de remplissage par l'actionnement d'une fermeture du réservoir.

18. Procédé selon la revendication 16 ou 17,
**caractérisé en ce que** le fonctionnement du dispositif de transport pendant l'amenée de carburant via le tube de remplissage est réglé par l'intermédiaire d'un ou plusieurs, avantageusement deux, capteurs pour mesurer le niveau du liquide.

19. Procédé selon une des revendications 13 à 18,
**caractérisé en ce que** la pression régnant dans le récipient sous pression est mesurée par l'intermédiaire d'un ou plusieurs capteurs de pression et est utilisée pour déterminer le niveau de remplissage dans le réservoir de carburant.

20. Procédé selon une des revendications 16 à 19,
**caractérisé en ce que** le carburant, lors de l'introduction dans le réservoir de carburant, est guidé via un siphon se trouvant dans le tube de remplissage.

21. Procédé selon une des revendications 13 à 20,
**caractérisé en ce que** l'introduction du gaz à partir du récipient sous pression est effectuée de façon réglée en pression.
